# FASCICULE DE BREVET EUROPEEN

(11) **EP 1 003 670 B1**
(45) Date de publication et mention de la délivrance du brevet: **04.01.2006**
(21) Numéro de dépôt: 99957156.5
(22) Date de dépôt: 23.06.1999
(51) Int. Cl.: B64B 1/06, B64B 1/00

(54) **AEROSTAT POUR LE TRANSPORT DE MATERIEL ET DE PASSAGERS**
LUFTBALLON ZUM TRANSPORTIEREN VON PASSAGIEREN UND GÜTERN
AEROSTAT FOR TRANSPORTING EQUIPMENT AND PASSENGERS

(30) Priorité: 23.06.1998 FR 9807922
(43) Date de publication de la demande: 31.05.2000
(73) Titulaire: Barbarie, Yves, 75016 Paris (FR); Hériché, Etienne, Aubepierre (FR); Barbarie, Stéphane, Hull, Qc (CA); Bru, Michel Pierre, 75017 Paris (FR)
(72) Inventeur: Barbarie, Yves, 75016 Paris (FR)
(86) Numéro de dépôt international: PCT/FR1999/001502
(87) Numéro de publication internationale: WO 1999/067129

(56) Documents cités:
- WO-A-96/05103
- FR-A- 2 351 858
- FR-A- 2 612 485
- FR-A- 2 675 462
- US-A- 3 753 539
- US-A- 4 934 631
- US-A- 5 071 090

## Description

Cette invention est du domaine de l'aéronautique et plus particulièrement de la catégorie 'aérostat', de transport commercial et de plaisance.

Les modèles aériens qui existent présentement et qui utilisent non pas des ailerons de portance mais plutôt l'allègement des masses pour prendre leur envol, présentent des désavantages notoires.

La montgolfière en plus de nécessiter une enveloppe gigantesque de rétention des volumes d'air chauffés, offre une sécurité très réduite des passagers. A la fragilité des équipements et à la complexité des préparatifs précédant l'envol, s'ajoutent l'instabilité et la précarité de la nacelle à la merci des vents tant au décollage qu'à l'atterrissage. De plus, les brûleurs à gaz présentent un réel danger et surtout lors des atterrissages en catastrophe.

Le dirigeable bien que jouissant d'un contrôle minimal par temps calme à cause de la présence de propulseurs, en plus d'être très vulnérable dans les airs par sa surface exposée à la moindre poussée des vents, affiche une taille titanesque qui en fait un vaisseau aérien nécessitant obligatoirement de très grands espaces au sol. A quai, il a l'inconvénient additionnel de devoir être constamment maîtrisée par des câbles et retenu lors des embarquements par une poussée inversée soutenue des propulseurs, sa masse étant allégée en fonction de sa capacité maximale de lévitation.

Les types d'appareils ci-haut décrits offrent peu de sécurité, sont encombrants par leurs dimensions à échelle démesurée, sont d'une maniabilité très restreinte, et nécessitent des préparatifs d'envol élaborés souvent à faire dans des conditions peu adaptées. Enfin, ils sont d'un confort douteux, et pourvu d'un habitacle élémentaire sinon vulnérable.

Ces appareils présentent également des fiches de dépenses élevées en carburant qui sont liées aux types de combustible et aux types de moteurs utilisés.

La présente invention qui fait l'objet de notre demande, selon les différentes caractéristiques qui la particularise, permet de remédier à ces nombreux inconvénients.

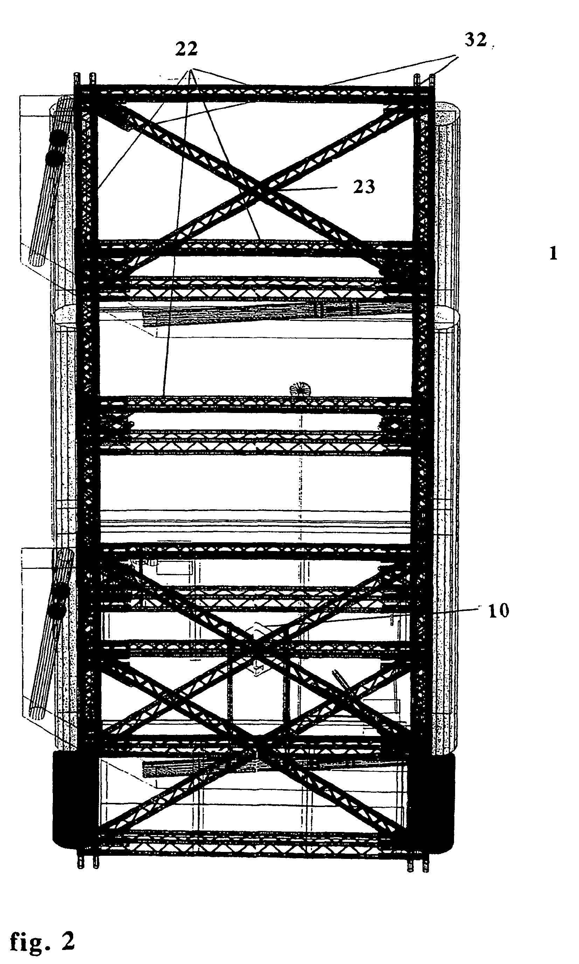

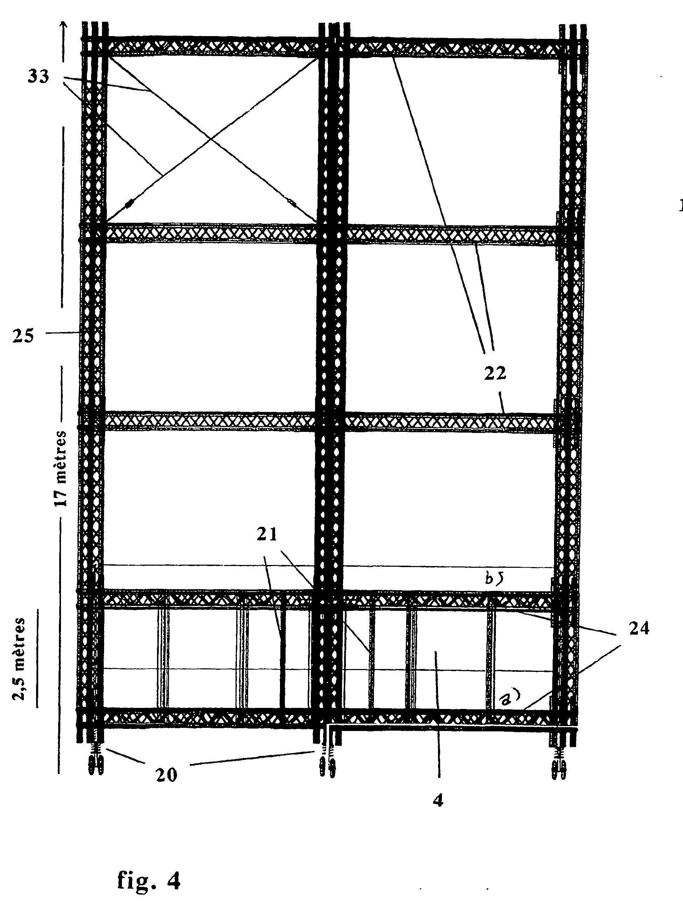

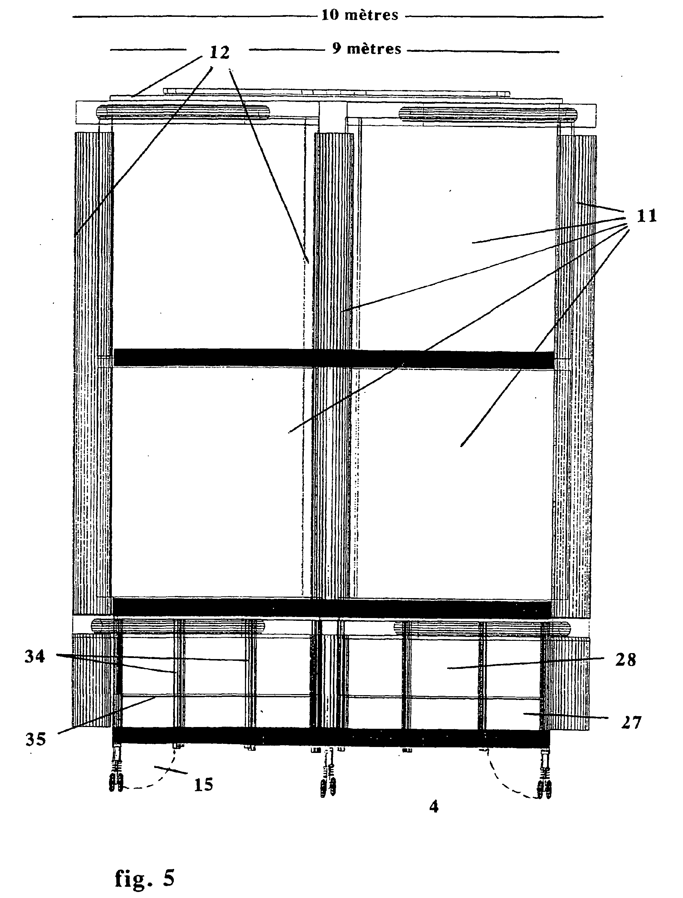

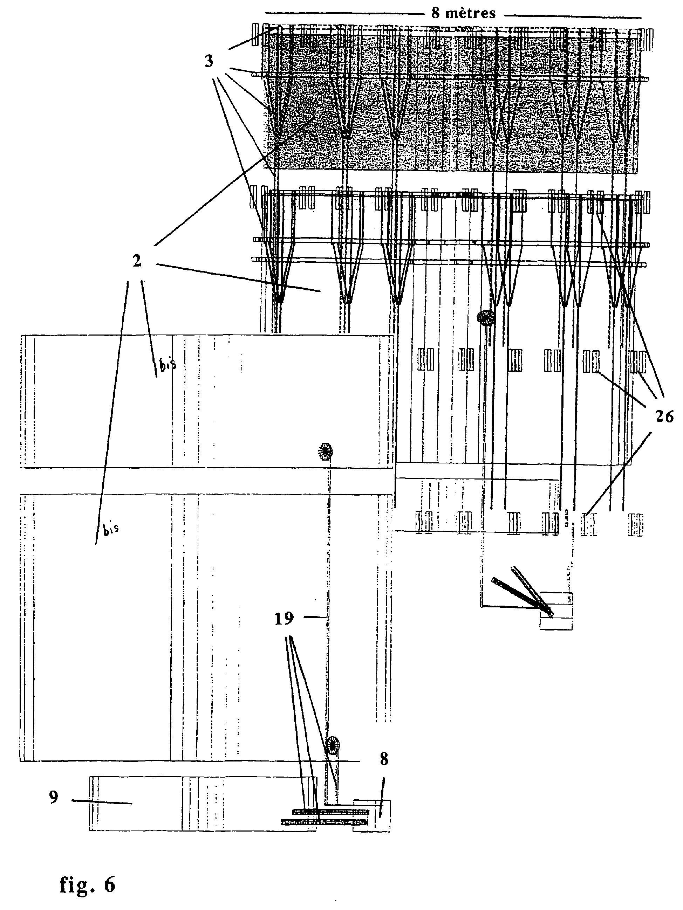

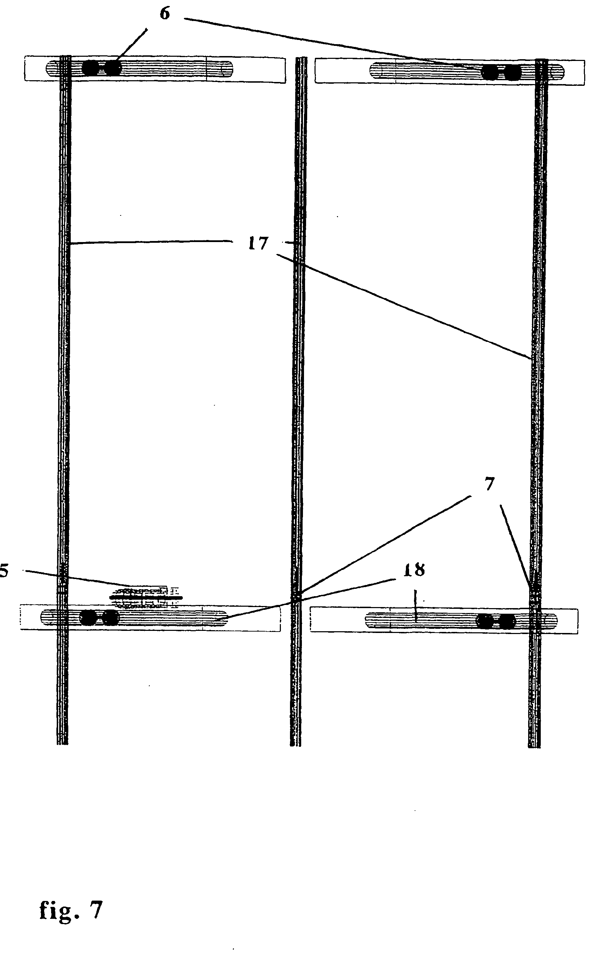

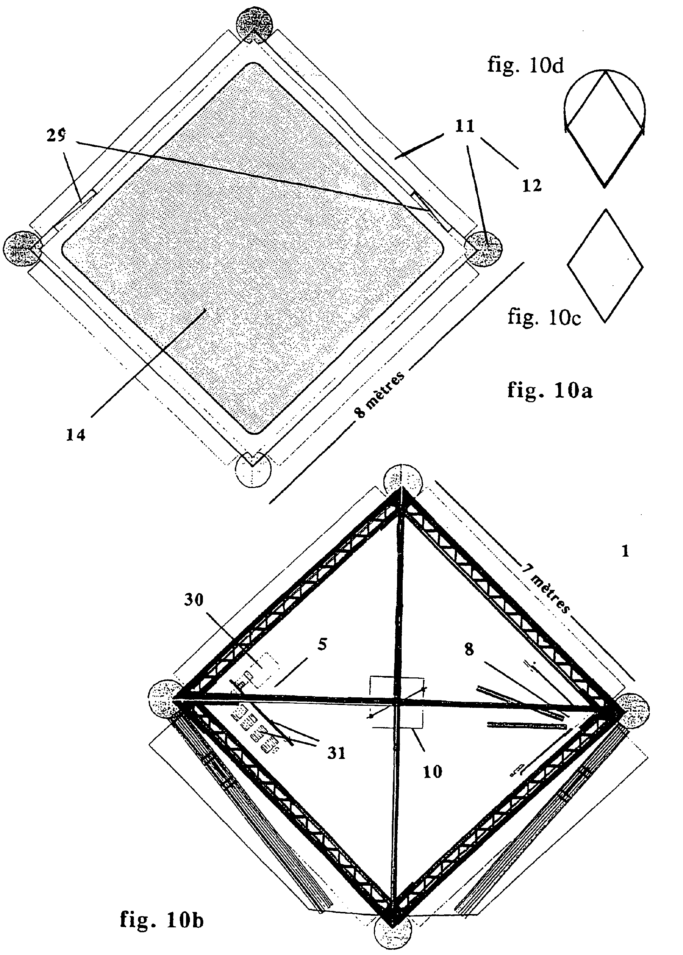

L'appareil qui est l'invention concerne une structure métallique à alliage léger et solide qui présente une charpente (1) - fig. 2 et 4 - construite sur la verticale et de taille de plusieurs fois réduite par rapport à la dimension des appareils existants. Cette charpente renferme tous les composants de l'invention dont, une cabine pour pilote et passagers (4) - fig. 4 et 5 - 'a plate-forme sécuritaire (27) et à vitrines anti-balles (28) - fig. 5 -, bien hermétique et solidement fixée à la base de la charpente; un système réducteur de masse , comprenant compresseur (8) - fig. 6 -, ballons intérieurs (2) - fig. 6 -, ballons extérieurs - fig. 5 - (11) et un réservoir à hélium légèrement pressurisé (9) - fig. 6 et 10b- pour neutraliser entièrement ou en partie le poids total de l'appareil; un stabilisateur (10) - fig. 2, 10b et 12 - activé sur commande pour éliminer les roulis et tangages inconfortables; un système de propulsion (6-7) (18-17) - fig. 7 - multidirectionnelle fonctionnant à l'électricité; pour soulever et déplacer l'appareil une fois sa masse neutralisée; une mini-centrale génératrice d'électricité (5) composée d'une petit monteur à essence (30), et d'un ensemble générateurs fait de'alternateurs, de bobines et de transformateurs (31) - fig. 7, 9 et 10b - pour produire et fournir l'énergie nécessaire au fonctionnement des moteurs électriques électriques à hélice (6-7); et, des instruments de pilotage manuel et automatique installé dans la cabine (4) -fig. 4 et 5 - permettant le contrôle de l'appareil dans les airs.

En vol, l'appareil qui est l'invention est silencieux, consomme peu, décolle, atterrit et se déplace en utilisant les propulseurs (6-7) fixés à la charpente (1) - fig. 2 et 4 - et que le pilote peut contrôler individuellement à partir de boutons et de manettes placés sur un tableau de bord dans la cabine (4) - fig. 4 et 5 -. L'appareil peut par la poussée opposée de ses propulseurs latéraux (6) - fig. 7 -se confronter à des vents moyens, se déplacer par vents moyens et se poser dans des espaces relativement restreints. La charpente (1) - fig. 2 et 4 - derrière laquelle se trouvent installés l'ensemble des composants de notre invention est est protégée des chocs et des avaries par une épaisse enveloppe faite de ballons moulés au profil extérieur de la charpente et gonflés à l'hélium (11) - fig. 5 et 10a - couverts d'une toile légère (12) - fig. 10a - faisant corps avec les ballons - fig. 5 et 10a - et résistant aux petits projectiles. Cette double enveloppe (11 et 12) - fig. 5 et 10a, par la surface plane qu'elle expose dans les airs selon la direction des vents fait finalement figure de voilure à la manière d'un voilier des mers mais qu'ici le pilote exploite en conjonction avec la poussée calculée des propulseurs (6-7) - fig. 7 - pour diriger l'appareil vers la destination souhaitée.

Dans le cas d'une perte rapide d'altitude, un parachute (14) - fig. 10a - placé sur le toit de l'appareil, permet avec l'aide des propulseurs (6-7) -fig. 7) -, de maîtriser le parcours de l'appareil pour assurer un atterrissage en toute sécurité.

### Selon des modes particuliers de réalisation:

1) La charpente peut porter au sol sur des chevilles égalisatrices ou sur roues directionnelles, à suspension (20). Des sacs-ballons rétractables (15) - fig. 5 - peuvent être placés sous l'appareil pour lui permettre de se poser sur l'eau.
2) La charpente peut être construite de feuilles métalliques et/ou de poutres en L ou en T et/ou de tubulaires à alliage léger à agencement géométrique et des poutres verticales et transversales complémentaires et des tiges croisées verticales (33) - fig. 4 - peuvent être ajoutées pour donner légereté, rigidité et forme à la structure.
3) Des coins de réception de type mâle ou femelle (32) - fig. 2, 9 et 12 - peuvent devenir des composants substituts à une structure de type monocoque à soudures multiples et faciliter le montage et la réparation et de l'ensemble structurel.
4) L'appareil peut prendre une forme sphérique, conique, cubique, etc. selon les contraintes qu'imposent les volumes de gaz requis pour soulever l'ensemble.
5) La charpente de notre invention (1) - fig. 2 et 4 - en forme de cube rallongé et dressé à la verticale permet une surface de contact au sol très réduite. Vues de haut, les extrémités peuvent former un carré (1) - fig. 10a - ou un losange (1) - fig. 10c - ou tous autres types de polygones. La charpente peut dans sa configuration présenter à l'arrière une forme ronde (1) - fig. 10d -, la large surface ainsi exposée pouvant en s'entrouvrant, devenir voilure par vent d'accompagnement à la façon du 'spinnaker' des voiliers.
6) L'enveloppe protectrice (12) - fig. 5 et 10a - peut couvrir séparément ou faire partie intégrante des ballons moulés (11) - fig. 5 et 10a - fixés à l'extérieur de la charpente.
7) Le système "réducteur de masse" contrôlé manuellement ou automatiquement peut comprendre plusieurs ballons-récepteurs des gaz, et plusieurs compresseurs à hélium (8) - fig. 10b -, tous utilisés pour neutraliser rapidement la masse combinée de l'appareil qui est l'inventionl'invention, du matériel embarqué et des passagers.
8) Les ballons placés à l'intérieur et à l'extérieur de la charpente peuvent être attachés à la charpente à soulever par un câblage de type montgolfière ou par des accroches intégrées à la structure des ballons.
9) Le petit moteur à essence qui est source d'énergie initiale pour la mini-centrale électrique peut être d'un autre type et activer tous types de générateurs, bobines et transformateurs. La centrale génératrice peut être complémentée ou substituée par un système d'énergie solaire dont les cellules photoélectriques pourraient couvrir les surfaces exposées de l'appareil.

### Les dessins annexés illustrent l'invention:

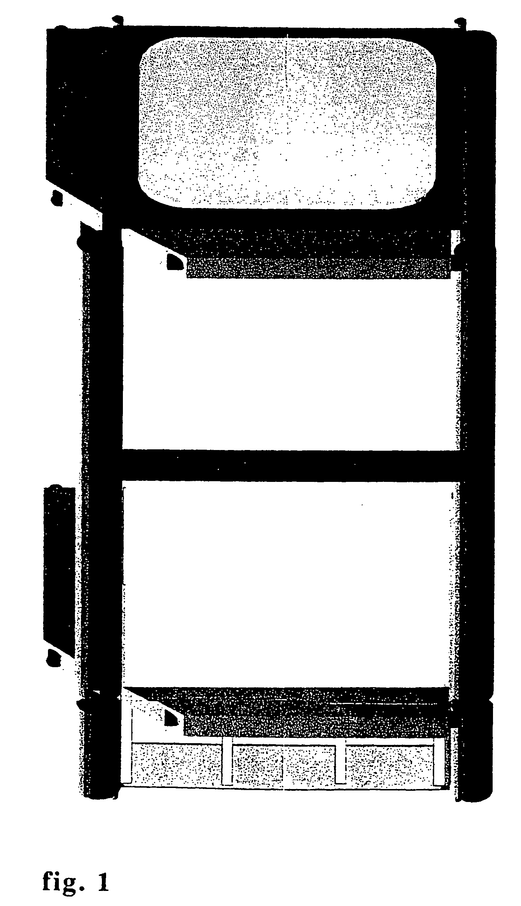

La figure 1 représente en perspective l'invention dans son ensemble.
La figure 2 représente en perspective la charpente de l'invention et ses composants.structurels.

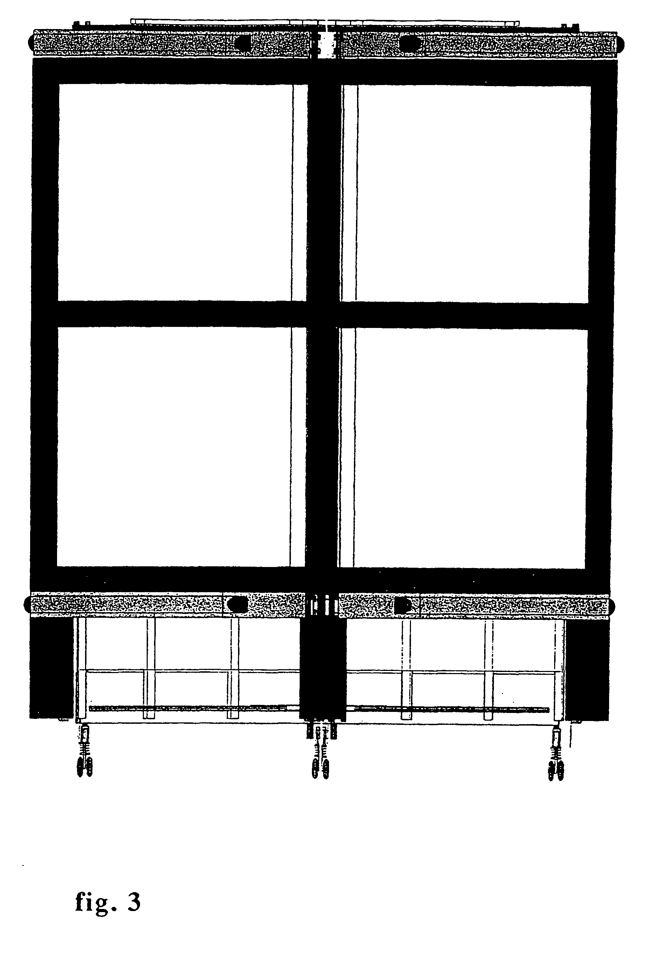

La figure 3 représente l'invention dans son ensemble vue de face.
La figure 4 représente la charpente l'invention vue de face.
La figure 5 représente les ballons moulés extérieures de l'invention vue de face.
La figure 6 représente l'ensemble réducteur de masse qui comprend les ballons intérieurs, les câblages (et les crochets fixés aux travers horizontaux), le réservoir à hélium contenu sous pression légère et le compresseur rattaché aux différentes parties de l'ensemble par les tubes ombilicaux.
La figure 7 représente l'ensemble propulsion vu de face composé des couloirs tubulaires horizontaux à l'intérieur des quels sont placés les moteurs à poussée latérale, les couloirs tubulaires verticaux à l'intérieur desquels sont placés les moteurs à poussée verticale et la mini-centrale électrique.

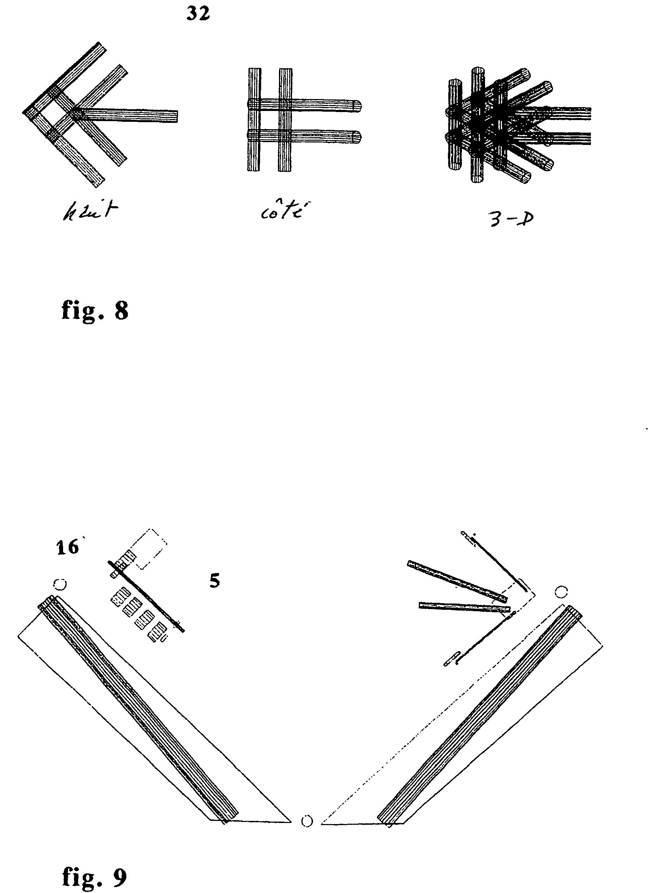

La figure 8 représente le coin de réception des poutres tubulaires, vu de haut, vu de côté et vu en perspective.
La figure 9 représente vus de haut, l'ensemble propulsion , la mini-centrale génératrice d'électricité, et, le compresseur et ses extensions ombilicales .
La figure 10 représente l'invention vue de haut avec, en relief, les ballons extérieurs moulés et le parachute d'urgence au centre (a); l'invention vue de haut avec, en relief, les configurations de la charpente, , l'orientation des couloirs tubulaires horizontaux et la position du stabilisateur, de la centrale éléctrique et du compresseur (10 b), l'invention dont la structure, vue de haut, prend la forme d'un losange (10 c) et, l'invention dont la structure, vue de haut, prend la forme d'un losange, à l'avant et d'un demi-cercle à l'arrière (10 d).

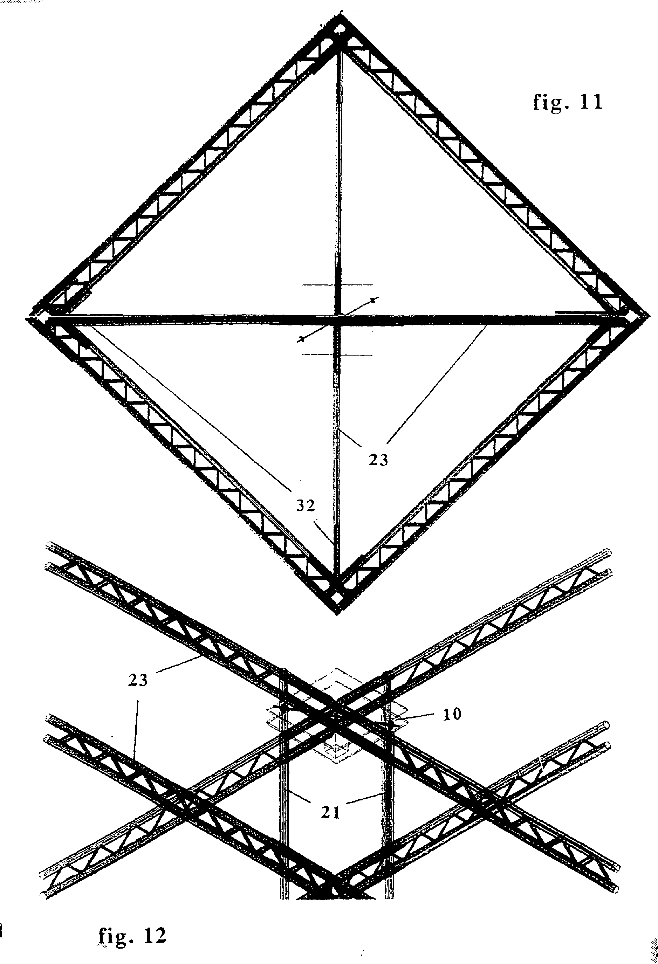

La figure 11 représente, en surdimension, la composition de la charpente vue de haut et illustre le rôle que jouent les coins de réception dans la construction de l'ensemble structurel.

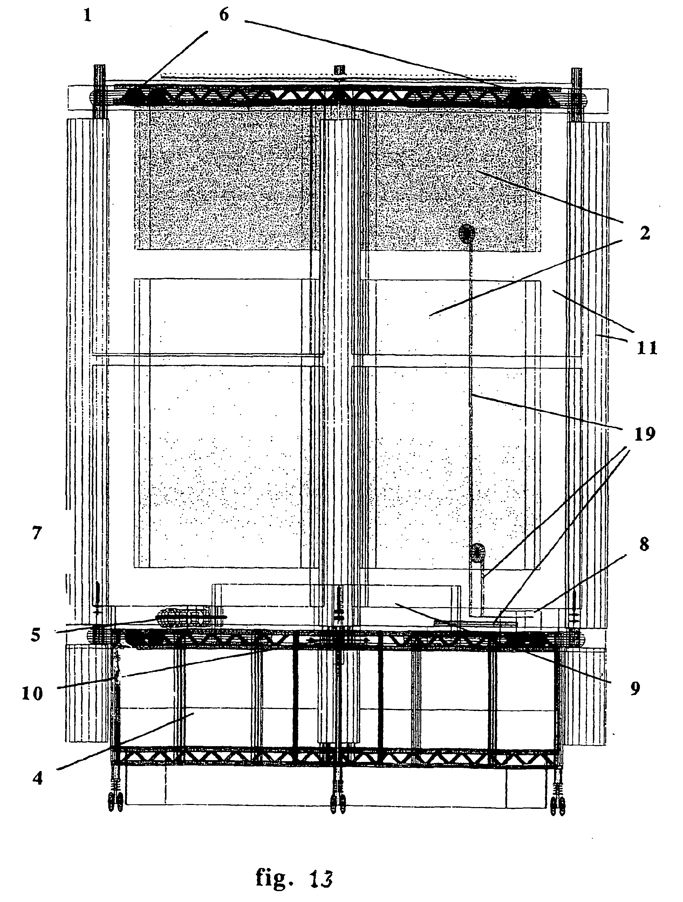

La figure 12 represente, en perspective surdimensionnée, le stabilisateur placé à l'intérieur des travers diagonaux de l'espace machines et les 4 poutres de soutènement placés au centre de la cabine pour renforcer l'ensemble structurel de l'habitacle.

### En référence à ces dessins, l'invention comporte:

Erigée en hauteur, la charpente (1) - fig. 2 et 4 - de l'appareil de forme cubique rallongée rappelant celle d'une tour est faite de pylônes (25) -fig. 4 - d'environ 17 mètres de haut à architecture géométrique renforcée et retenus dans chaque coin et en partant de la base, de poutres de soutènement (21) - fig. 4 - , de travers horizontaux (22) - fig. 4 et 12 - et de paliers faits de travers disposés en X (24) - fig. 4 - successifs, le tout rassemblé par les coins de réception (32) - fig. 2, 9 et 12.

Les travers diagonaux (23) - fig. 2, 11 et 12 - disposés à égale distance dans la charpente (1) - fig. 2 et 4 - appliquent une resistance transversale et supportent la plate-forme des passagers (24a) - fig. 4 - et celle des machines (24b) - fig. 4 -. Les travers horizontaux (22) - fig. 4 et 12 - solidifient la position des colonnes verticales (25) - fig. 4 - et fournissent de plus les points d'appuies aux attaches (26) - fig. 6 - des câbles et crochets (3) fig. 6 - retenant les ballons de soulèvement intérieurs et extérieurs (5-11) - fig. 6 et 5 -.

Les coins de réception de type mâle ou femelle (32) - fig. 2, 9 et 12 - raccordent les travers horizontaux (22) - fig. 4 et 2 -, les travers diagonaux (22) - fig. 2 et 11 - et les colonnes verticales (25) - fig. 4 qui sont ensuite solidement vissés et rivetés pour faciliter à la fois le montage, le démontagre et la réparation de l'ensemble structurel.

La charpente (1) - fig. 2 et 4 - qui abrite tous les composants de l'invention et les protège des obstacles extérieurs, est couverte d'une légère mais épaisse enveloppe protectrice composée de ballons (11)-fig. 5 - gonflés en permanence de gaz hélium et moulés aux formes extérieures de la charpente (1) ceux-ci étant recouverts en entier d'un tissu résistant aux petits projectiles et aux déchirures; exception faite de la cabine (4) à vue panoramique profitant déjà d'une protection.

Le tout est posé sur un support amortissant avec roues (20) - fig. 4 - pour le déplacement au sol avec option de ballons gonflables placés (15) - fig. 5 - derrière les roues pour l'amerrissage.

La cabine-passagers (4) - fig. 4 et 5 - est bien encastrée dans la base de la charpente (1) . Des supports faits de tiges verticales (21) - fig. 4 - retiennent à la fois le plancher et le plafond (24) fig. - 4 - et sont posées au centre de la cabine, accrochées au point de rencontre des travers diagonaux des plates-formes inférieure et supérieures de la cabine (4). La partie inférieure des parois latérales (27) - fig. 5 - est solidement accrochée aux travers inférieurs horizontaux et fermement retenue de l'extérieur par des lames de soutènement (34) fig. 5 - fixées aux poutres horizontales supérieures et inférieures entourant l'habitacle. La paroi latérale supérieure (28) - fig. 5 - encastrée dans une rainure de la partie supérieure de la paroi inférieure (27) - fig. 5 - de la cabine (4) est constituée de panneaux transparents anti-balles (28) - fig. 5 - assurant à la fois une vue panoramique aux passagers et une protection contre les petits projectiles. Deux ouvertures (29) - fig. 10a - à verrous sécuritaires situées dans la partie arrière de la cabine (4) permettent l'entrée et l'évacuation des occupants.

Les ballons gonflés à l'hélium et moulés (11) - fig. 5 et 10a - selon la configuration extérieure de la charpente (1) - fig. 2 et 4 - contribue à alléger la masse et à protéger l'appareil et son contenu .

Le revêtement résistant mais léger (12) - fig. 5 et 10a - enveloppe l'appareil pour une protection totale des surfaces gonflées et des équipements transportés sans pour autant couvrir l'espace-cabine (4) - fig. 4 et 5 - déjà sécurisée . Ce revêtement sert aussi de voilure pour l'exploitation des vents contraires et d'accompagnement.

Le système Réducteur de masse (2-8-9-11) comprend des ballons (1) - fig. 6 - gonflables à l'hélium, d'un diamètre égale à la dimension des parois intérieures de la charpente et plus ou moins égale au volume de l'espace inoccupée de la charpente et retenus par un ensemble de câbles (3) - fig. 6 - rattachés à la charpente (1) - fig. 2 et 4 - qu'ils permettent de soulever; et, des ballons d'un mêtre d'épaisseur (11) - fig. 5 et 10a - gonflés à l'hélium et moulés selon la configuration extérieure de la charpente qui ajoutent à la capacité variable de rétention des gaz des ballons intérieurs (2) - fig. 6 - pour ensemble alléger l'appareil.

Les tubes ombilicaux (19) - fig. 6 - de l'ensemble compresseur (8) - fig. 6 et 10b - sont fixés aux ballons (2) - fig. 6 - enfermés derrière la charpente (1) - fig. 2 et 4 - et au réservoir pressurisé (9) - fig. 6 - couché sur la plate-forme (24b) - fig. 4 - des machines.

En fonction de la masse à neutraliser, l'ensemble-compresseur par l'entremise de ces tubes (8) - fig. 6 et 10b -, , sur commande manuel ou automatique du pilote, injecte dans les ballons intérieurs (2) - fig. 6 - une quantité définie de gaz entreposé dans le réservoir pressurisé (9) - fig. 6 -.

Par un processus inversée, en fonction de la masse partielle de l'appareil à rétablir , l'ensemble-compresseur (8) - fig. 6 et 10b - retire sur commande manuel ou automatique une quantité déterminée de gaz des ballons (2) - fig. 6 - intérieurs, recompresse le volume de gaz extraits pour l'entreposer dans le réservoir légèrement pressurisé (9) - fig. 6 -.

Le système générateur d'électricité (5) - fig. 7, 9 et 10b - est composé d'un moteur (30) - fig. 10b - à essence petit format (moto) produisant la source énergétique de base et d'un engrenage qui lie l'arbre du moteur à une tige secondaire laquelle, fait tourner une série d'alternateurs (31) - fig. 10b - liés à un ou des modules bobines et transformateurs qui produisent l'énergie requise par les propulseurs 6-7) - fig. 7 - et les autres accessoires électriques de l'appareil.

Des moteurs électriques couplés (7) - fig. 7 - de force et de vitesse équivalente à 3500 à 4000 tours /minutes adaptée aux besoins de légèreté et de miniaturisation de l'appareil entraînent une hélice multipâles ou plus d'un diamètre d'environ 50 centimètres. Ils sont insérés dans de longs couloirs tubulaires fixés à la verticale sur l'appareil et d'un diamètre de quelques millimètres plus grands que celui de l'hélice (17) - fig. 7 et glissés à l'intérieur et sur toute la longueur des pylônes verticales (25) - fig. 4 - de la charpente (1), pour obtenir sur commande du pilote, une poussée d'air concentrée vers le bas ou vers le haut permettant alors à l'appareil de gagner ou de perdre de l'altitude.

Des moteurs électriques couplés (6) - fig. 7 - de force et de vitesse équivalente à 3500 à 4000 tours /minutes adaptée aux besoins de légèreté et de miniaturisation de l'appareil entraînent une hélice multipâles ou plus d'un diamètre d'environ 50 centimètres. Ils sont insérés dans de longs couloirs tubulaires d'un diamètre de quelques milimètres plus grands que celui de l'hélice et fixés à l'horizontal et plus ou moins égale à la longueur d'un travers horizontal (22) - fig. 4 - et placés en position inférieure et supérieure sur chacune des surfaces frontales de l'appareil pour obtenir, sur commande du pilote, une poussée d'air concentrée vers l'avant ou l'arrière , de la gauche ou de la droite pour faire exécuter à l'appareil qui est l'invention, un déplacement vers l'arrière, vers l'avant, vers la droite ou vers la gauche.

Un gyrospcope (10) - fig. 2, 10b et 12 - activé par un moteur électrique à vitesse variable est placé entre le plafond de la cabine (4) - fig. 4 et 5 - et le palier 24b) - fig. 2 et 4 - réservé aux machines et sert à éliminer les mouvements de tangage et de roulis de l'appareil . Selon le type de pilotage que le pilote veut imposer à l'appareil, le système peut être désactivé ou réactivé sur commande. En combinaison avec les propulseurs, (6-7) - fig. 7 - il sert aussi à contrer les vents lorsque l'appareil temporairement immobilisé n'est pas retenue par d'autres artifices.

Une fois la masse de l'appareil neutralisée par l'ensemble réducteur de masse - fig. 6 -, le pilotage manuel ou automatique met en marche les propulseurs 6) placés à la verticale de l'appareil pour décoller et ensuite les propulseurs (7) placés à l'horizontale pour donner la direction à prendre - fig. 7 -. Le déplacement de l'appareil dans les airs, sur l'eau et sur le sol se fait en variant la poussée des moteurs individuellement ou par ensemble.

Les manoeuvres se font à la façon d'un voilier confronté à des vents opposés ou d'accompagnement à savoir, en zigzagant vers sa destination et en exposant la surface voilure (11) - fig. 5 - dans l'angle favorisant la portée par les vents. Le pilote ajuste la poussée donnée aux propulseurs horizontaux selon les vents en présence et le cap à tenir.

### Comment fonctionne l'invention

Au repos, l'appareil au sol est, par précaution, attaché à des fils métalliques rétractables retenus aux quatre coins de la charpente et à des crochets bien ancrés à la piste, ou, est à l'abri dans un hangar qui peut avoir des portes latérales pour recevoir et faire entrer l'appareil et, en option, un toit ouvrant permettant des décollages et des atterrissages directs par beau temps.

Le port d'attache ou le lieu d'atterrissage peut comprendre un ensemble de hautes palissades ou de brise-vents seuls ou disposés en étoile derrière lesquels peuvent décoller et atterrir les voiliers des airs.

Au repos, les ballons intérieurs branchés au compresseur sont partiellement vide. L'appareil a donc une partie de sa masse et peut se déplacer au sol sans difficulté.

Après un avis de sortie favorable, les préparatifs au décollage nécessite une vérification positive du bon fonctionnement des équipements de pilotage manuel et automatique et de la quantité des gaz requis pour effectuer l'envol prévu. Le pilote doit donc obligatoirement connaître le poids des occupants et/ou des matériaux que l'appareil devra emporter à son bord.

Une fois ces informations connues et considérées favorablement, le pilote démarre le moteur de la mini-centrale et met en marche le compresseur. Le compresseur injecte alors la quantité de gaz léger (hélium) qui a été établie pour neutraliser à la fois la masse de l'appareil et le poids total des occupants qui seront transportés (max. 4-8 selon le poids individuel des passagers).

Les passagers sont invités à monter. La tâche des réducteurs de masse presque terminée, les moteurs verticaux sont mis en marché exerçant une poussée calculée dirigée vers le haut qui retient l'appareil au sol dans l'attente imminente d'une neutralisation totale de la masse. Le pilote relâche alors les moteurs des quatre couloirs d'air verticaux en poussée inversée (sélection à la diagonale) et redonne graduellement une poussée vers le sol aux deux autres moteurs tout en réduisant à zéro la poussée inversée des moteurs des deux premiers couloirs verticaux.

Cette manoeuvre permet à l'appareil alors de prendre son envol à la verticale. Les moteurs horizontaux sont alors mis en marche et leur poussée sert à diriger l'appareil dans la direction souhaitée. La poussée des moteurs placés à la verticale est réduite lorsque l'altitude désirée est atteinte. Si la poussée de tous les moteurs est réduite à zéro, l'appareil reste suspendu dans les airs, à la merci des vents.

Le pilote établit le cap à tenir et après avoir déterminé la direction des vents, positionne l'appareil pour que la surface de certaines parois de l'appareil puisse utiliser les vents à son avantage.

La poussée des moteurs latéraux est alors calculée pour à la fois garder le cap et exploiter au maximum l'angle d'arrivée des vents.

L'appareil qui fait l'objet de notre invention silonne donc le ciel à la façon d'un voilier qui sans perdre le cap, par vents contraires, zigzague pour avancer vers sa destination.

La destination une fois atteinte, le pilote place l'appareil face au vent, augmente la poussée des moteurs horizontaux pour immobiliser l'appareil dans les airs et déclenche une poussée vers le haut des moteurs verticaux pour entamer la descente. L'atterrisage en douceur se fait en réduisant graduellement la poussée des moteurs verticaux à quelques metres du sol tout en conservant l'appareil face au vent et la poussée immobilisatrice des moteurs horizontaux qui contre la poussée des vents..

Cette manoeuvre est conservée jusqu'à ce que le réducteur de masse ait rétabli la masse partielle de l'appareil, le pilote prenant également en considération la perte de masse soudaine que représente le débarquement des passagers compensée par un accroissement temporaire de la poussée inversée des moteurs verticaux.

La masse partielle rétablie, si l'appareil doit rester sur place quelques temps et ne se trouve pas à bon port, il peut être sécurisé au sol contre la violence soudaine des vents par des attaches toujours conservées à bord qui seront solidement entrés dans le sol.

## Revendications

1. Appareil utilisant un gaz plus léger que l'air pour transporter par les airs, du matériel et des passagers, **caractérisé en ce qu'**il comprend une charpente (1) ayant une structure allongée construite sur la hauteur renfermant dans la partie supérieure de sa structure, des ballons (2) gonflés à l'hélium retenus par des câbles (3) accrochés à la charpente (1) qu'ils agrippent et arrachent de la force gravitationnelle; une cabine (4) à vitrage panoramique anti-balles pour pilote et passagers encastrée dans la base de la charpente (1) ; une mini-génératrice d'électricité (5) qui alimente les accessoires et les équipements électriques de l'appareil; des propulseurs (6 et 7) placés dans de longs couloirs tubulaires (9 et 18) pour une concentration de la poussée d'air, qui servent à soulever la masse neutralisée de l'appareil et à le déplacer dans l'espace aérien; un ensemble compresseur (8) qui injecte dans les ballons (2) ou retire des ballons (2) une quantité calculée de gaz hélium entreposé dans un réservoir légèrement pressurisé (9), en fonction de la masse totale de l'appareil à neutraliser ou à rétablir en partie; un système stabilisateur (10) pour éliminer les mouvements de roulis et de tangage et un ensemble protection composée de ballons gonflés à l'hélium et moulés (11) toute la surface extérieure de la charpente, et, une enveloppe (12) couvrant toute la charpente (1) faite d'un tissu résistant aux déchirures et aux petits projectiles - exception faite de l'espace cabine (4).

2. Appareil selon la revendication 1 carractérisé en ce que la charpente (1) représente une structure dont l'extrémités vue de haut forme un carré ou un losange et dont l'avant de l'appareil est formé de la pointe de rencontre de deux côtés de la charpente (1) qui permettent à l'enveloppe extérieure (11 et 12) couvrant cette surface de la charpente (1) à la fois de couper les vents en avançant et d'exposer certaines des surfaces-voilures pour exploiter avantageusement l'angle d'arrivée des vents.

3. Appareil selon la revendication 1 et 2 carractérisé en ce que la charpente (1) est composée et montée autour de coins de réception de type mâle ou femelle (32) qui accueillent et raccordent les travers horizontaux, les travers diagonaux et les colonnes verticales à chaque palier de la charpente (1) pour les visser et riveter solidement entre eux (32) et, par cela, faciliter le montage, le démontage et la réparation et de l'ensemble structurel.

4. Appareil selon la revendication 1 et 2 **caractérisé en ce que** la charpente (1) qui renferme tous les composants de l'invention est aussi protégée par une double enveloppe extérieure de protection qui comprend des ballons moulés et gonflés à l'hélium (11) couvrant toutes les surface extérieures de la charpente (1) exception faite de la section cabine (4) et d'un tissu résistant aux déchirures et aux petits projectiles (12) couvrant et protégeant toutes les surfaces extérieures de l'appareil - exception faite de la section cabine (4).

5. Appareil selon la revendication 1 ,2 et 4 **caractérisé en ce que** l'enveloppe extérieure (12) couvrant les ballons moulés extérieurs (11) fixés à la charpente (1) sert de surface-voilure à l'appareil pour l'exploitation des vents.

6. Appareil selon la revendication 1 **caractérisé en ce que** la mini-centrale électrique (5) a comme source d'énergie initale le mouvement rotatif de l'arbre d'un moteur moto à essence lancé à moyen régime qui, couplé par engrenage à une tige elle-même accusant un mouvement rotatif actionne une série d'alternateurs (31) dont la production énergétique après avoir subie les transformations requises alimentent les moteurs (6) et (7), l'ensemble compresseur (8), le moteur du stabilisateur (10) et les autres accessoires électriques de l'appareil qui est l'invention.

7. Appareil selon la revendication 1 et 6 **caractérisé en ce que** les propulseurs horizontaux (6) et verticaux (7) sont des moteurs électriques performant faisant tourner des hélices multipâles placés dans de longs couloirs tubulaires (18 permettant de concentrer, à la sortie, la poussée d'air produite.

8. Appareil selon la revendication 1 et 7 **caractérisé en ce que** les propulseurs verticaux (7) insérés dans de longs couloirs tubulaires (17) sont placés dans chacun des pylônes verticales (25) de la charpente (1) leur sortie donnant près du sol et sur le toit de la charpente (1); et, selon la revendication 1 et 7, **caractérisé en ce que** les propulseurs horizontaux (6) insérés dans de longs couloirs tubulaires (18) sont placés au sommet de la charpente (1) et au-dessus de la cabine (4) le long des surfaces frontales gauche et droite de l'appareil.

9. Appareil selon la revendication 1 **caractérisé en ce que** le système stabilisateur (10) est un gyroscope à plateau horizontal et actionné par un moteur électrique à vitesse variable placé à l'intérieur de la charpente entre le plancher des machines et le plafond de la cabine pour éliminer les mouvements inconfortables de roulis et de tangage de l'appareil et qui peut être activé ou désactivé en fonction des manoeuvres que souhaite effectuées le pilote.

10. Appareil selon la revendication 1 **caractérisé en ce que** l'ensemble réducteur de masse est composé de ballons (2) liés par des tubes ombilicaux (19) branchés à un compresseur ou plus (8) qui servent à conduire les gaz décompressés provenant du réservoir (9) dans les ballons (2) et, à récupérer les gaz contenus dans les ballons (2) devant être recompressés avec le compresseur (8) avant d'être entreposés dans le réservoir (9) prêts à être à nouveau décompressés et réinjectés dans les ballons (2); appareil selon la même revendication, **caractérisé en ce que** l'ensemble réducteur comprend aussi des ballons moulés (11) gonflés en permanence et fixés à l'extérieur de la charpente (1) et couverts d'une enveloppe protectrice (12).

11. Appareil selon la revendication 1 et 10 **caractérisé en ce que** l'ensemble-réducteur par la recompression des gaz vers le réservoir (9) vide en partie les ballons (2) et réduit la capacité de lévitation des gaz contenus dans les ballons (2) ce qui redonne à l'appareil qui est l'invention, une partie de sa masse.

12. Appareil selon la revendication 1, 9 et 11 **caractérisé en ce que** l'ensemble-réducteur par la décompression d'une partie des gaz retenus sous pression dans le réservoir (9) remplit en partie ou en totalité les ballons (2) et augmente la capacité de lévitation des gaz déjà présents dans les ballons (2) et (11) ce qui, graduellement neutralise la masse totale de l'appareil qui est l'invention et de ce qu'il emporte et donne la capacité aux propulseurs verticaux (7) de soulever l'appareil et aux propulseurs horizontaux (6) de déplacer l'appareil dans la direction souhaitée par le pilote.

13. Appareil selon une quelconque des revendications précédentes **caractérisé en ce que** les ballons (2) retenus par un ensemble de câbles (3) fixés aux attaches (26) des travers horizontaux (22) de la charpente (1) sur réception d'une quantité de gaz hélium décompressés calculée par le compresseur (8) en se remplissant, servent à réduire graduellement le poids de l'appareil, du matériel et des occupants embarqués et à neutraliser à la fin la force d'attraction terrestre exercée sur l'appareil qui peut être alors soulevé dans les airs par la poussée des propulseurs verticaux (7).

14. Appareil selon la revendication 1, 2 et 3 **caractérisé en ce que** la cabine qui forme un tout hermétique (4) s'abrite derrière les clonnes verticales (25) de la charpente (1), que la plateforme de la cabine (4) est posée sur les travers horizontaux (22) et et les travers diagonaux (23) retenues au centre par un ensemble de tiges verticales (21) supportant à la fois le plancher du palier de la cabine et le plancher de l'espace-machines de la charpente (1) le tout porté par une suspension sur roue (20) ou par un ensemble sacs-ballons (15) gonflables (et rétractables) pour les amerrissages; que la vitrine à vue panoramique posée au-dessus des parois latérales garde-fous (27) est de type anti-balle; et, que les issues de l'espace-cabine (29) pour l'entrée et l'évacuation des occupants, solidement verrouillées au cours de l'envol, sont placées à l'arrière de la cabine.

## Claims

1. A craft using lighter-than-air gas to transport by air material and passengers, which comprises, a framework (1) enclosing in the upper part of its structure, balloons (2) inflated with a lighter-than-air gas and held by cables (3) hooked to the framework (1) which they grip and pull away from the gravitional force; a cabin (4) with bulletproof windows for the pilot and passengers set on the base of the framework (1); a mini power station (5) which supplies electricity to the equipments and accessories of the craft; propellents (6 and 7) placed inside long tubular passages (9 and 18) for concentrated air thrust, used to lift the neutralized mass of the craft and to move it in the air space; a compressor system (8) which injects in the balloons (2) or retrieves from the balloons (2) a calculated quantity of lighter-than-air gas stored in a slightly pressurized tank (9) according to the total mass of the craft to be neutralized or to partially restore; a stabilizer system (10) to eliminate rolls and sways and a protection system consisting of balloons inflated with lighter-than-air gas, molded (11) over the total exteror surface of the framework, and, a cover (12) covering all the framework (1) made of a fabric resistant to tears and small projectiles - excluding the passenger compartment (4).

2. The lighter-than-air craft of claim 1 wherein the framework of the craft (1) represents a rectangular structure or extended cubical erected vertically which extremities seen from above form a square or a diamond pattern and which front of the craft is formed by the meeting point of two of the sides of the framework (1) which allow the exterior envelope (11 and 12) covering this surface of the framework (1) both to cut facing winds and expose at proper angle said surfaces as sails to oncoming winds.

3. The lighter-than-air craft of claim 1 wherein the framework of the craft (1) consists of and is mounted around male or female connection corners (32) which receive and link the horizontal cross-overs, the diagonal cross sections and the vertical pylons at each level of the framework (1) to be solidly screwed and riveted together (32) to facilitate mounting, dismantling and repair of the overall structure.

4. The lighter-than-air craft of claim 1 wherein the framework of the craft (1) which encloses all the components of the invention, is protected by a double exterior envelope consisting of molded balloons, inflated with lighter-than-air gas, (11) covering the exterior surface of the framework (1) in exclusion of the cabin (4) and a fabric resistant to tears and small projectiles (12) covering and protecting all the exterior surfaces of the craft -in exclusion of the cabin (4).

5. The lighter-than-air craft of claim 1 wherein the exterior envelope (12) covering the exterior molded balloons (11) attached to the framework (1) serves as sail surfaces for the craft to exploit winds.

6. The lighter-than-air craft of claim 1 wherein the mini electric power station (5) has as initial source of energy the drive shaft of a liquid fuel engine geared to a series of alternators (31) which energy production after transformation, supply electricity to the propellents (6) and (7) the compressor system (8), the stabilizer motor (10) and the other electrically powered accessories of the said craft.

7. The lighter-than-air craft of claim 1 wherein the horizontally oriented propellents (6) and the vertically oriented propellents (7) are powerful electric motors turning multiblade propellers placed inside long tubular passages (18 - 17) allowing at the exit a concentrated air thrust.

8. The lighter-than-air craft of claim 1 wherein the vertically oriented propellents (7) inserted in long tubular passages (17) are placed inside each vertical pylons (25) of the framework (1) their exit being close to the base and the top of the framework (1) ; and, the horizontally oriented propellents (6) inserted in long tubular passages (18) are positioned at the top of the framework (1) and above the cabin (4) along the left and right frontal surface of the craft.

9. The lighter-than-air craft of claim 1 wherein the stabilizer system (10) is a gyroscope activated by a variable speed electric motor and set on an horizontal plane inside the framework between the machine floor and the ceiling of the cabin to eliminate uncomfortable sways and rolls of the craft and activated or disactivated in relation with the intended pilot maneuvers.

10. The lighter-than-air craft of claim 1 wherein the mass reduction system consists of balloons (2) linked by umbilical tubes (19) connected to one or more compressors (8) used to flow decompressed gas from the pressurized tank (9) to the balloons (2) and, to recuperate the gas inside the balloons (2) to be recompressed by the compressor (8) before being stored in the tank (9) ready to be again decompressed and reinjected into the balloons (2) ; and, wherein the mass reduction system comprises also molded balloons (11) permanently inflated and fitted to the exterior of the framework (1) and covered by a protective envelope (12).

11. The lighter-than-air craft of claim 1 and 10 wherein the mass reduction system, by recompressing gas into the tank, (9) partially empty the balloons (2) reduce the levitation capacity of the gas contained in the balloons (2) and restore to the craft part of its mass.

12. The lighter-than-air craft of claim 1, 9 and 11 wherein the mass reduction system by the decompression of part of the gas kept under pressure in the tank (9) fill totally or partially the balloons (2) and increase the levitation capacity of the gas already inside the balloons (2) and (11) which gradually neutralizes the total mass of the craft and what is on board and gives the vertical propellents the potential (7) to lift the craft and the horizontal propellents (6) to move the craft in the direction intended by the pilot.

13. The lighter-than-air craft of claim 1 wherein the balloons (2) held by a system of cables, (3) fitted to hooks (26) on the horizontal cross-overs (22) of the framework (1) on being filled with a calculated quantity of decompressed lighter-than-air gas (8) are used to reduce gradually the weight of the craft, of the loaded material and of the passengers and neutralize the earth attraction exerted on the craft and its load which can then be lifted in the air with the thrust of the vertical propellents (7).

14. The lighter-than-air craft of claim 1 wherein the cabin (4) is placed behind the vertical pylons (25) of the framework (1), the cabin platform (4) is set on the horizontal cross-overs (22) and the diagonal cross sections (23) held at the centre by a system of vertical beams (21) supporting both the bottom level of the passenger compartment and the bottom level of the machine compartment of the framework (1) the overall structure is carried by a suspension system on wheels for ground movement (20) and /or by a system of inflatable and retractable balloon-bags (15) for sea landings; the windows fitted to the lateral balustrade (27) are bulletproof; and, the secured cabin openings, (29) for embarkation and disembarkation of passengers, are positioned at the rear of the cabin.

## Patentansprüche

1. Der Apparat benutzt Gas, das leichter ist als Luft um in der Luft Material und Passagiere zu transportieren. Er zeichnet sich dadurch aus, dass er aus einem länglichen hohen Gerüst (1) besteht, das im oberen Teil seiner Struktur mit Helium gefüllte und an Seilen (3) gehaltene Ballone (2) beherbergt, die am Gerüst (1) befestigt sind, das sie mit und gegen die Schwerkraft bewegen können; eine Kabine (4) mit kugelsicherem Panoramafenster für Pilot und Passagiere ist im Zentrum des Gerüsts (1) eingelassen; ein kleiner Generator zur Stromerzeugung (5) versorgt das Zubehör und die elektronische Ausrüstung des Apparats; Antriebe (6 und 7) befinden sich in langen Röhrengängen (9 und 18) und ermöglichen einen konzentrierten Luftschub, der dazu dient, das Gewicht auszugleichen und den Apparat im Luftraum zu bewegen; ein Kompressorsystem (8) füllt oder leert die Ballone (2) mit einer genau berechneten Menge an Heliumgas, das in einem Druckbehälter (9) aufbewahrt wird, je nach Gesamtgewicht des Apparats, die es auszugleichen oder wiederherzustellen gilt; ein System zur Stabilisierung (10) verhindert Schlingern oder Stampfen der Bewegungen; ein Schutzsystem aus mit Helium gefüllten und eng anliegenden Ballonen (11) schützt die gesamte Oberfläche des Gerüsts und eine Hülle (12) um das Gerüst (1) aus einem reißfesten und kugelsicheren Stoff bedeckt das gesamte Gerüst mit Ausnahme der Kabine (4).

2. Der Apparat entsprechend der Vorgabe 1 ist so gebaut, dass das Gerüst (1) eine Struktur hat, deren Enden von oben gesehen ein Quadrat oder eine Raute formen. Vorn hat der Apparat eine Spitze, an der zwei Seiten des Gerüsts zusammentreffen, welche es ermöglicht, dass die äußere Hülle (11 und !2), die die Oberfläche des Gerüsts (1) bedeckt einmal beim Fahren den Wind abhält und zum anderen einige Segelflächen im richtigen Winkel die Windrichtungen nutzt.

3. Der Apparat entsprechend den Vorgaben 1 und 2 ist so gebaut, dass das Gerüst (1) aus horizontalen und diagonalen Streben und vertikalen Röhren montiert ist, die jeweils in den Ecken des Gerüsts an Kopplungen zusammenlaufen, an denen sie solide miteinander verschraubt und vernietet sind (32) und somit das Ganze auch leicht zu montieren, demontieren und reparieren ist.

4. Der Apparat entsprechend den Vorgaben 1 und 2 ist so gebaut, dass das Gerüst (1), das alle Bestandteile der Erfindung enthält durch eine doppelte äußere Hülle geschützt ist, die auch eng angepassten und mit Helium gefüllten Ballonen (11) umschließt und die gesamte äußere Oberfläche des Gerüsts (1) umhüllt, mit Ausnahme der Kabine (4) und aus einem reißfesten und kugelsicheren Stoff (12) besteht. Die Hülle bedeckt und schützt die gesamte äußere Oberfläche mit Ausnahme der Kabine (4).

5. Der Apparat entsprechend den Vorgaben 1,2 und 4 ist so gebaut, dass die äußere Hülle (12), welche die äußeren eng angepassten Ballone (11) überspannt, mit dem Gerüst (1) verbunden ist und als Oberflächensegel zur Nutzung des Windes dient.

6. Der Apparat entsprechend der Vorgabe 1 ist so gebaut, dass die kleine Energiezentrale (5) als Basisenergie die Bewegung der Welle eines mittleren Benzinmotors nutzt, dessen Getriebe mit einer Stange verbunden ist, die selbst eine Rotationsbewegung einer Reihe von Wechslern (31) hervorruft, deren Energieproduktion nach der Transformation die Motoren (6 und 7), den Kompressor (8), den Motor des Stabilisators (10) und andere elektronische Bestandteile des Apparats antreibt.

7. Der Apparat entsprechend der Vorgaben 1 und 6 ist so gebaut, dass die horizontalen und vertikalen Antriebe (6 und 7) leistungsfähige Elektromotoren sind, die die Propeller in den röhrenartigen Gängen (18) betreiben, so dass der produzierte Luftschub konzentriert werden kann.

8. Der Apparat entsprechend der Vorgaben 1 und 7 ist so gebaut, dass die vertikalen Antriebe (7) sich in den langen röhrenartigen Gängen (17) in jedem der vertikalen Masten (25) des Gerüsts (1) befinden, welche auf den Boden und bis unter das Dach reichen; der Apparat nach Anforderung 1 und 7 ist so gebaut, dass sich die horizontalen Antriebe (6) in den langen röhrenartigen Gängen (18) oben im Gerüst und unter der Kabine (4) entlang der frontalen Oberfläche rechts und links des Apparats befinden.

9. Der Apparat entsprechend der Anforderung 1 ist so gebaut, dass das System zur Stabilisierung (10) ein Rund mit horizontalem Plateau bildet, das von einem Elektromotor mit variabler Geschwindigkeit angetrieben wird und sich im Inneren des Gerüsts zwischen dem Boden der Maschinen und der Plattform der Kabine befindet und dafür sorgt, dass ungünstige Bewegungen wie Schlingern und Stampfen des Apparats verhindert werden. Das System kann an und aus geschaltet werden, je nach dem, welches Manöver der Pilot ausführen will.

10. Der Apparat entsprechend der Vorgabe 1 ist so gebaut, dass das System zur Reduktion des Gewichts aus Ballonen (12) besteht, die mit zentralen Röhren (19) an einen oder mehrere Kompressoren (8) angeschlossen sind, welche dazu dienen, das leicht komprimierte Gas aus dem Druckbehälter (9) in die Ballone (2) zu leiten bzw. das Gas aus den Ballonen (2) wieder aufzunehmen, bevor es mit Hilfe der Kompressoren (8) komprimiert und im Druckbehälter (9) gelagert wird, von wo aus das Gas wieder neu freigesetzt und in die Ballone (2) geleitet werden kann; der Apparat entsprechend der selben Vorgabe ist so gebaut, dass das System zur Reduktion der Masse ebenfalls eng am Gerüst anliegende, ständig gefüllte Ballone (11) enthält, die außen mit dem Gerüst verbunden und mit einer Schutzhülle (12) umgeben sind.

11. Der Apparat entsprechend den Vorgaben 1 und 10 ist so gebaut, dass das System zur Reduktion der Masse durch die Zurückleitung des Gases in den Druckbehälter (9) gleichzeitig einen Teil der Ballone (2) leert und damit das Abheben der mit Gas gefüllten Ballone (2) verhindert, so dass der Apparat der Erfindung einen Teil seiner Masse wiedererhält.

12. Der Apparat entsprechend der Vorgaben 1, 9 und 11 ist so gebaut, dass das System zur Reduktion der Masse durch Entweichen eines Teils des Gases aus dem Druckbehälter (9) einen Teil oder alle Ballone (2) füllt und damit das Abheben der bereits mit Gas gefüllten Ballone (2 und 11) ermöglicht, wobei schrittweise die Masse des Apparats ausgeglichen wird und die vertikalen Antriebe (7) den Apparat anheben und die horizontalen Antriebe den Apparat in die gewünschte Richtung steuern lassen.

13. Der Apparat entsprechend den Vorgaben ist so gebaut, dass die Ballone (2) an Seilen (3) mit den Halterungen (26) der horizontalen Verstrebungen (22) des Gerüsts (1) verbunden sind und durch die hineingeleitete, genau berechnete Menge an Heliumgas durch den Kompressor (8) dafür sorgen, dass schrittweise das Gewicht des Apparats, des Materials und der Passagiere an Bord ausgeglichen und schließlich die Erdanziehungskraft aufgehoben wird, so dass der Apparat durch einen Luftschub der vertikalen Antriebe (7) angehoben werden kann.

14. Der Apparat entsprechend den Vorgaben 1, 2 und 3 ist so gebaut, dass die Kabine, die ein hermetisch verschlossenes Ganzes (4) bildet, hinter den vertikalen Gängen (25) des Gerüsts (1) geschützt liegt, die Plattform der Kabine (4) auf den horizontalen Verstrebungen (22) aufliegt und die diagonalen Verstrebungen (23) in der Mitte durch vertikale Stangen (21) getragen werden, die den Boden der Kabine und den des Maschinenraums halte. Das Ganze wird steht auf einer Aufhängung aus Rollen oder auf Ballonsäcken (15), die aufblasbar sind und zur Landung auf dem Wasser dienen. Die kugelsichere Scheibe für den Panoramablick hat über der Seitenwand ein Schutzgeländer (27). Der Ein- und Ausgang der Kabine (29), der auch als Notausgang dient, ist während des Flugs fest verschlossen und befindet sich im Hinteren der Kabine.
